# EUROPEAN PATENT SPECIFICATION

(11) **EP 0 318 270 B1**
(45) Date of publication and mention of the grant of the patent: **04.09.1996**
(21) Application number: 88311089.2
(22) Date of filing: 23.11.1988
(51) Int. Cl.: G06F 15/16

(54) **A multiprocessor system and corresponding method**
Multiprozessorsystem und zugehöriges Verfahren
Système multiprocesseur et méthode correspondante

(30) Priority: 25.11.1987 JP 295333/87
(43) Date of publication of application: 31.05.1989
(73) Proprietor: FUJITSU LIMITED, Kawasaki-shi, Kanagawa 211 (JP)
(72) Inventor: Ikeda, Masayuki Eshiiru Nakahara 404, Kawasaki-shi Kanagawa 211 (US); Ueda, Koichi, Kawasaki-shi Kanagawa 213 (US)
(74) Representative: Rackham, Stephen Neil

(56) References cited:
- EP-A- 0 110 569
- GB-A- 2 112 186
- US-A- 4 099 233
- US-A- 4 591 981

## Description

The present invention relates to a multiprocessor system, more particularly, it relates to a method and an apparatus for control of processors constituting the multi-processor system.

In data processing systems, it has been found to be advantageous to provide a plurality of processors to increase the overall speed of the system. Various control methods and system architectures have been developed to optimise the speed of such processing systems, in particular to optimise the speed for data communication between the processors. One system is disclosed in GB-A-2112186. Accordingly to the disclosure in this application, each processor is associated with a shared memory. The shared memory is connected to a system bus, to which a master controller is also connected. When a data transfer is required, data from an originating processor is stored in its shared memory. This is accessed by the master controller, which then enables the shared memory of any processors to which the data must be transmitted, and simultaneously writes the data to each such shared mamory. With this system, a processor can resume operations as soon as data is stored in its associated memory, with no need to wait until the data reaches its destination. Further, data may simultaneously be transmitted to a plurality of destination processors. Nevertheless, every data transfer must be effected via the shared memories and master controller. This may be time consuming.

EP-A-0110569 discloses a ring network in which processors are divided into clusters. The transmission of data around the ring network is controlled such that the data will not be transmitted between adjacent nodes if a buffer associated with one node becomes full.

The present invention is advantageous for a large scale numerical simulation in scientific and technical fields in which high speed calculations are necessary.

According to a first aspect of this invention a method of control between processors constituting a multiprocessor system comprises the steps as set out in claim 1.

By dividing the multiprocessor system constituted by a plurality of processors into a plurality of groups, each of which is called a "cluster", the control of access between the processors is performed through each cluster. Thus each cluster is an element for processing the access control of the processors. This enables high speed processing of orders between processors and a simplification of a control program.

According to a second aspect of this invention an apparatus for a cluster control between processors constituting a multiprocessor system, the processors being divided into a plurality of clusters, comprises:
a global control unit connected to each of the clusters through a corresponding bus line for processing an order between the clusters, characterised in that the global control unit comprises a priority circuit for determining a priority of the order sent from each of the clusters, a logical-to-real cluster translation logic circuit for converting a logical cluster number to a physical cluster number, a logical- to-real cluster translation table for referring to a relationship between the logical cluster number and the physical cluster number, a cluster connection table for indicating a connection state of the cluster, and a cluster power-ON table for indicating a power ON/OFF state of the cluster, and
a memory control unit provided in each of the clusters and connected between the global control unit and each of the processors belonging to each of the clusters and controlling transmission and reception of orders between the global control unit (GCU) and the processors, wherein each of the clusters further comprises a local storage unit connected to the memory control unit and storing data, a direct access storage device connected to the memory control unit and storing data, and a service processor connected to the memory control unit and processing the reset operation and an initial program loading operation, the memory control unit comprises a priority circuit for determining a priority of requests sent from the processors a command executor for executing a request sent from the global control unit, a status generator for generating status information in accordance with a request from the command executor, and an interruption pending latch circuit for turning ON an interruption pending latch.

An embodiment of a method and apparatus in accordance with this invention will now be described and contrasted with the prior art with reference to the accompanying drawings; in which:-
Figure 1 is a schematic block diagram of a conventional multiprocessor system;
Figure 2 is a basic block diagram of an apparatus for a cluster control in the multiprocessor system according to the present invention;
Figure 3 is a schematic block diagram of a cluster according to an embodiment of the present invention;
Figure 4 is one example of format of an order according to the present invention;
Figure 5 is a schematic block diagram of a global control unit according to an embodiment of the present invention;
Figure 6 is a schematic block diagram of a memory control unit according to an embodiment of the present invention;
Figure 7 is a flowchart for explaining a CLUSTER-SENSE order according to an embodiment of the present invention;
Figure 8 is a flowchart for explaining a SYNCHRONOUS-CALL order according to an embodiment of the present invention; and,
Fig. 9 is a flowchart for explaining a CLUSTER-RESET and IPL order according to an embodiment of the present invention.

Before describing the preferred embodiments, an explanation will be given of a conventional multi-processor system.

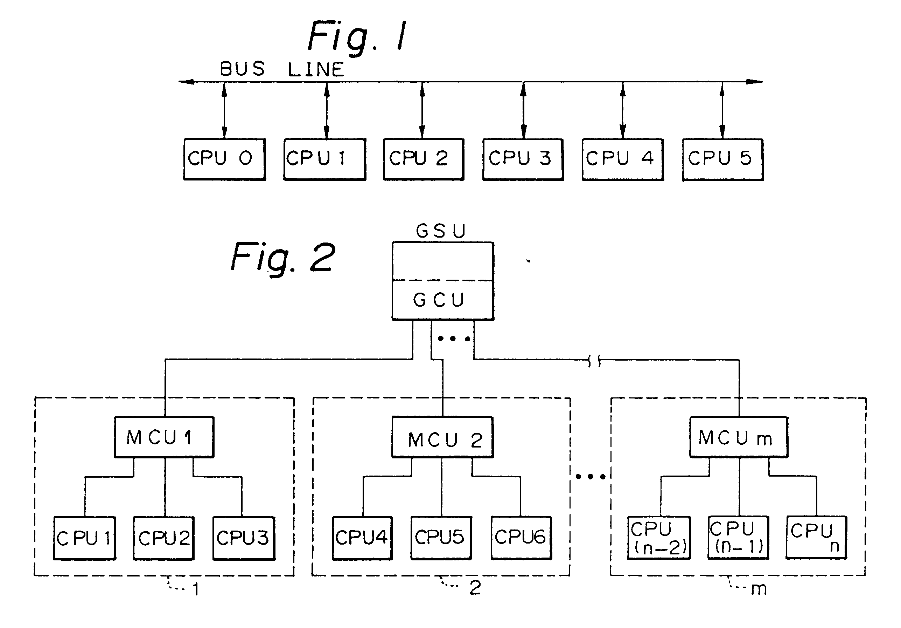

Figure 1 is a schematic block diagram of a conventional multiprocessor system. In Fig. 1, the multi-processor system is constituted by, for example, processors CPUO to CPU5, and each processor is connected in parallel to another processor through a bus line BUS and a mutual control is carried out between one processor and the other.

In this multiprocessor system, each processor is set to four states having an exclusive relationship therebetween; i.e., any one of four states ("STOP˝, "OPERATION", "LOAD" and "CHECK-STOP") are set in each processor. When carrying out an access, one processor outputs a sense signal to the other processor, to recognize the state of other processor, receives a response from the other processor involving the above four states, and carries out a mutual control in accordance with the above four states.

In this system, however, much time is necessary for the management of access steps between the processors, and thus it is difficult to achieve a high speed processing in the multiprocessor system. Further, the control program is complicated due to the large number of access steps.

Figure 2 is a basic block diagram of an apparatus for the cluster control in the multiprocessor system according to the present invention. In Fig. 2, a plurality of processors CPU1 to CPUn are divided into "m" groups ( 1 to m) each having three processors, and each group is called a "cluster". MCU1 to MCUm are a memory control unit provided in each cluster and connected between the processor and a global control unit GCU. The global control unit GCU controls the access between clusters, as explained in detail hereinafter, and is contained in a global storage unit GSU. The state of each cluster is defined by the global control unit GCU based on the state of the processors belonging to that cluster. Further, the global control unit GCU sets up an order for each cluster and controls the processor, based on the order for each cluster, through the memory control unit MCU.

In the above structure, since the access between processors is controlled through the cluster, it is possible to reduce the control time between processors. Further, it is possible to simplify the control program since the access is performed between clusters.

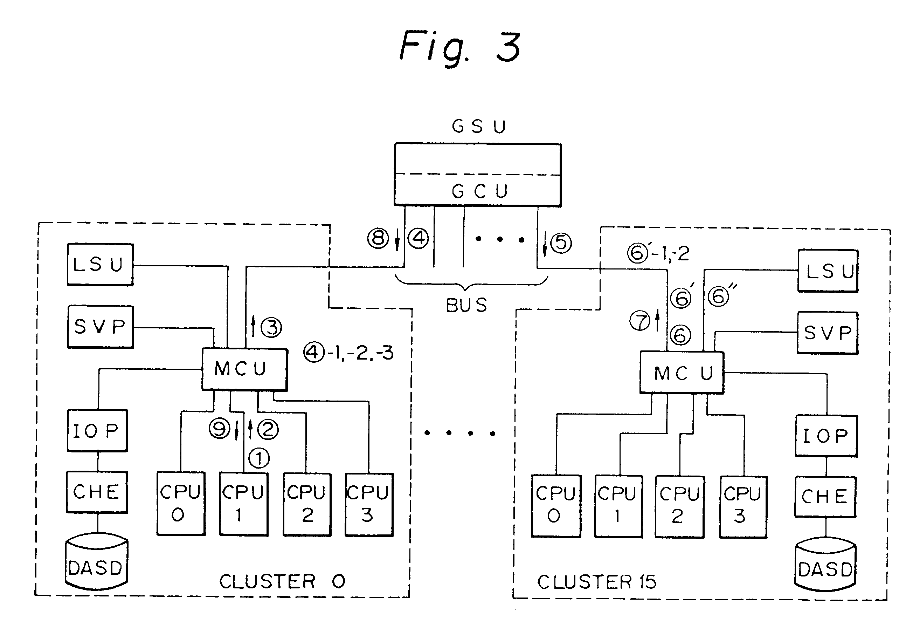

Figure 3 is a schematic block diagram of a cluster according to an embodiment of the present invention. In Fig. 3, the multiprocessor system is constituted by sixty four processors, which are divided into sixteen clusters each having four processors CPU0 to CPU3. Therefore, the global control unit GCU controls only sixteen clusters 0 to 15 through the bus line BUS. In this case, each cluster has the same structure. For example, the cluster 0 comprises a memory control unit MCU, four processors CPU0 to CPU3, a local storage unit LSU, a direct access storage device DASD, a service processor SVP, an input/output processor IOP, and a channel element CHE connected between the MCU and the DASD. The global control unit GCU is used in common for all clusters 0 to 15, and is connected to each cluster through the bus line BUS.

The processor belonging to each cluster is defined by the four states "STOP", "OPERATION", "LOAD", and "CHECK-STOP", and these four states are exclusive therebetween and change under the following conditions.
(1) When an operator uses an operating facility.
(2) When the processor receives a specified "SIGNAL-PROCESSOR (SIGP)" order for that processor.
(3) When the cluster having that processor receives a specified "GLOBAL SIGNAL PROCESSOR (GSIGP)" order for that cluster.

Further, the state of the cluster is based on the state of the processors belonging to that cluster, as follows.

### CLUSTER-STOP

None of the processors in the cluster is in the OPERATION or LOAD state, and at least one processor in the cluster is in the STOP state.

### CLUSTER-CHECK-STOP

None of the processors is in the STOP, OPERATION or LOAD states. CLUSTER-CHECK-STOP further includes the states wherein the processors are not connected to each other or none of the processors is supplied with power.

### SUBSYSTEM-DAMAGE

When a channel subsystem damage is found in the cluster, the cluster is placed in the SUBSYSTEM-DAMAGE state. When the SUBSYSTEM-DAMAGE state is set, the CLUSTER-STOP Or CLUSTER-CHECK-STOP states are simultaneously set in the cluster.

In this embodiment, when one processor commands another processor to process an order, the command is sent to the cluster to which the other processor belongs and is not sent directly to the other processor.

Three main orders are sent to each cluster, as defined as follows. Namely, the CLUSTER-SENSE order, the CLUSTER-SYNCHRONOUS-CALL order (floating interruption order), and the CLUSTER-RESET and LOAD order (RESET and IPL order). Further, for example, the CLUSTER-BROADCAST-INTERRUPTION order for accessing the same order to all clusters and CLUSTER-ASYNCHRONOUS-INTERRUPTION order are sent, and these orders are shown as a whole as a GSIGP order. The GSIGP order is mainly used for a floating interruption between the processors, as explained hereinafter.

The operation of these orders is explained in detail hereinafter.

### CLUSTER-SENSE order

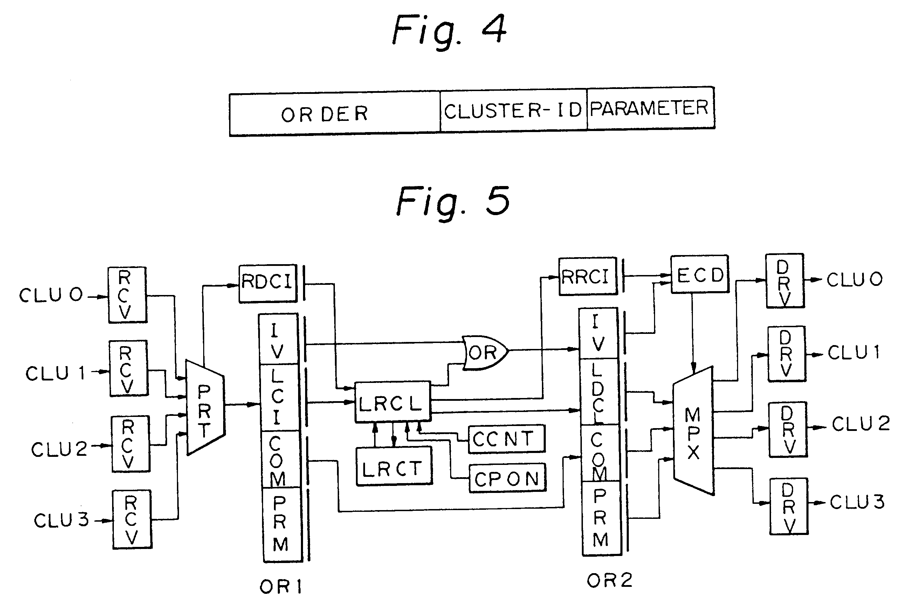

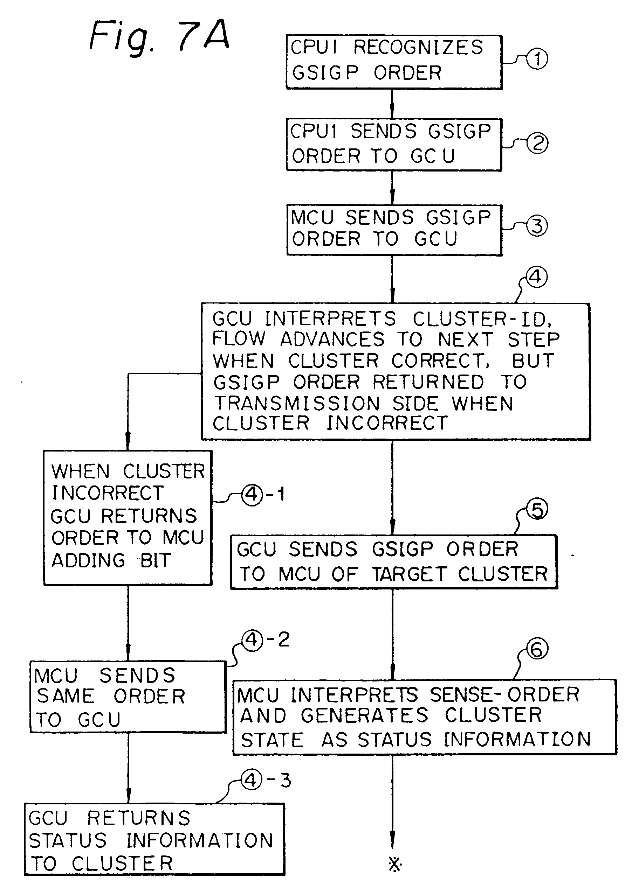

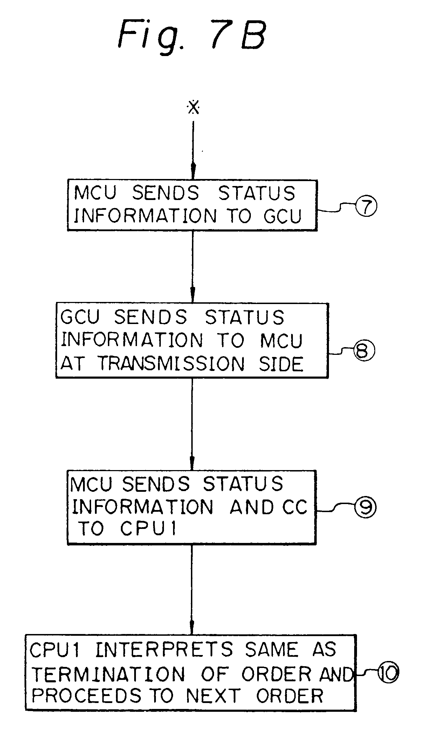

In Fig. 3, the encircled numbers correspond to the following steps. The flowchart of these steps is shown in Figs. 7A and 7B.
① The processor 1 (CPU1) in the cluster 0 decodes and recognizes the GSIGP order.
② The processor 1 sends the GSIGP order to the memory control unit MCU. The GSIGP order includes a CLUSTER-ID portion and an ORDER portion.
③ The memory control unit MCU sends the GSIGP order to the global control unit GCU. The GSIGP order includes a SENSE order, a CLUSTER-ID and a parameter, as shown in Fig. 4.
④ The global control unit GCU interprets the CLUSTER-ID. When the correct cluster (connected to the cluster) is designated, the flow proceeds to the next step. When the designated cluster is incorrect, the GSIGP order is returned to the cluster at the transmission side with the information "incorrect destination".
⑤ The global control unit GCU sends the GSIGP order to the memory control unit MCU of the target cluster.
⑥ When the memory control unit MCU at the reception side interprets the SENSE order, it generates the state of that cluster as the status information based on the states of the processors, the information from the input/output processor IOP, and the states of the synchronous call (floating interruption order) in the MCU.
⑦ The memory control unit MCU in the cluster at the reception side sends the status information of that cluster to the global control unit GCU.
⑧ The global control unit GCU sends the received status information to the memory control unit MCU in the cluster at the transmission side.
⑨ The memory control unit MCU sends the received status information and a condition code (CC) to the processor CPU1 which generated the GSIGP order.
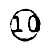 When the processor CPU1 receives the status information and the condition code CC, it interprets this as a termination of the GSIGP order, and proceeds to the next order.

In the case of an "incorrect destination" mentioned in step ④, as shown in steps ④-1, ④-2 and ④-3, the global control unit GCU returns the GSIGP order including the incorrect destination to the memory control unit MCU at the transmission side in the same order as the GSIGP order sent from other cluster. In this case, a flag bit indicating the incorrect destination is added to the order. When the memory control unit MCU at the transmission side recognizes the flag bit in the GSIGP order received, the MCU returns the same GSIGP order as above to the global control unit GCU as the status information. At that time, the content of the GSIGP order is ignored. The global control unit GCU sends the returned status information to the memory control unit MCU at the transmission side as the status information, also the status information received from the destination side in the case of a normal GSIGP order. The interface lines between the MCU and the GCU include a signal line for discriminating either the status information or the order from the transferred information. As explained above, in the case of an incorrect destination, the GSIGP order is sent to the memory control unit MCU as the order and that order is returned to the global control unit GCU, and then that order is again returned to the memory control unit MCU as the status information. This is because these procedures make the operation procedures at the GCU and the MCU almost identical.

### CLUSTER-SYNCHRONOUS-CALL order

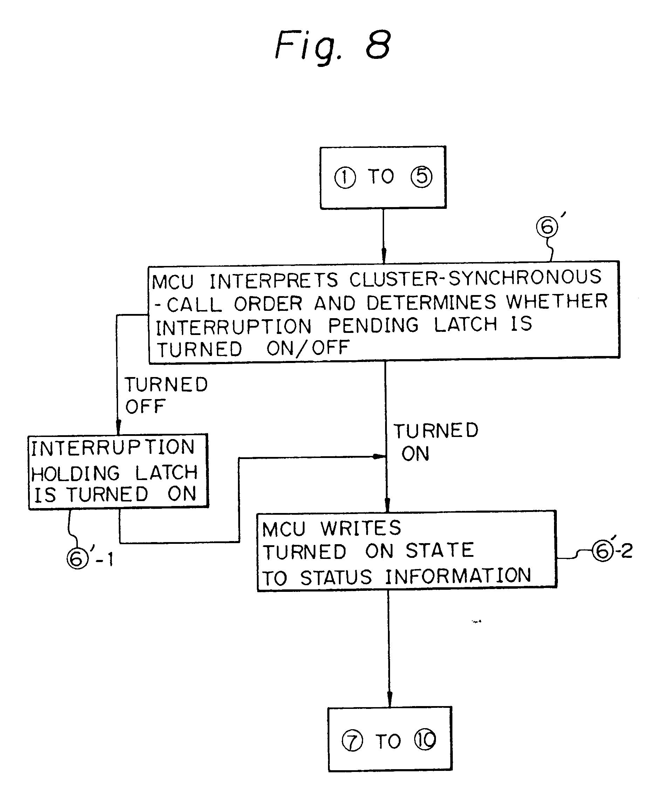

This step is shown in Fig. 8.

Since the procedures from step ① to step ⑤ are the same as for the steps shown in Fig. 7, an explanation thereof is omitted. The following step follows step ⑤.

⑥′ When the memory control unit MCU of the reception side interprets the CLUSTER-SYNCHRONOUS-CALL order, it determines whether an interruption pending latch of that memory control unit MCU is turned ON or not. When the latch is turned ON, the memory control unit MCU writes the "turned ON state" to the status information. When the latch is turned 0FF, the interruption pending latch of the memory control unit MCU is turned ON as shown by steps ⑥′-1 and ⑥′-2.

The same procedures as for step ⑦ to step 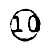 are carried out after the above step ⑥′. Further, when the interruption enabled processor exists in the cluster at the reception side, the interruption is made to that processor.

The procedures of the CLUSTER-RESET and IPL order are as follows.

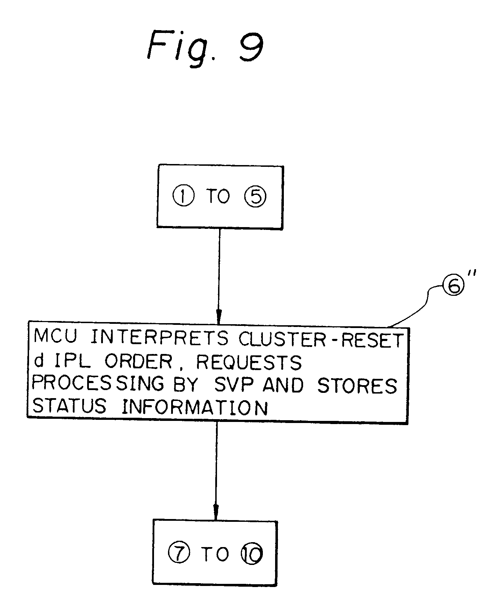

This step is shown in Fig. 9.

Since the procedures from the step 1 to the step ⑤ are the same as for the steps shown in Fig. 7, an explanation thereof is omitted. The following step follows step ⑤

⑥˝ The memory control unit MCU at the reception side interprets the CLUSTER-RESET and IPL order, and requests that these orders be processed by the service processor SVP in that cluster. When the transmission of information from the memory control unit MCU to the service processor SVP is completed, the memory control unit MCU stores the status information. The following procedures are the same as for step ⑦ to step 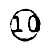 shown in Fig. 7.

The service processor SVP at the reception side resets all devices in the cluster, starts an IPL (Initial Program Loading) operation, and writes the program from the direct access storage device DASD to the local storage unit LSU.

In this case, since the IPL operation is performed asynchronously to the termination of the order at the transmission side, as shown by step 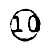 , the IPL operation is not always terminated in the reception side even if the order at the transmission side is terminated.

Figure 5 is a schematic block diagram of a global control unit according to an embodiment of the present invention. The global control unit GCU is an essential part of the global storage unit GSU. In Fig. 5, RCV represents a receiver, PRT a priority circuit, LRCL a logical-to-real cluster translation logic circuit, LRCT a logical-to-real cluster translation table, CCNT a cluster connecting table, COPN a cluster power-on table, MPX a multiplexer, ECD an encoder, OR an order, and DRV a driver.

The order OR1 comprises a CLUSTER-INVALID (IV), a LOGICAL-CLUSTER-ID (LDI), a command (COM) and a parameter (PRM). Further, the order OR2 comprises a LOGICAL-DRIVE-CLUSTER-ID (LDCI) instead of the LOGICAL-CLUSTER-ID (LCI), RDCI is a REAL-DRIVE-CLUSTER-ID and RRCI is a REAL-RECEIVE-CLUSTER-ID.

The cluster connecting table CCNT indicates the state of connection of the cluster; the command COM designates the order of the GSIGP; the cluster power-on table CPON indicates a power-on/off state of the cluster; the driver DRV transfers the order to the cluster; and, the encoder ECD encodes the IV bit and the RRCI bit and determines the destination of the processor transferring the command. The bit IV indicates the invalidity of the cluster, and is normally "0" when generating the command request and turned ON when the designated cluster does not exist or the power is not turned ON; the bit LCI is a logical identifier and the target of the request is designated by the logical cluster number; and the bit LDCI is a logical processor number of the processor generating the request and sets the output of the table LRCL.

The circuit LRCL is a logical block converting a logical cluster number to a physical cluster number. The circuit LRCL inputs the bit LCI and outputs the bit RRCI by referring to the table LRCT. In the conversion, the circuit LRCL checks whether or not the designated real cluster is connected (command CCNT) and the power of the designated real cluster is turned ON. If the designated cluster is incorrect, the bit IV is turned ON. Further, the circuit LRCL converts the bit RDCI to the bit LDCL.

The table LRCT refers to the relationship between the logical cluster number and the physical cluster number. The multiplexer MPX selects the cluster generating the request. The parameter PRM is an order of the GSIGP and the order necessitating the parameter is transferred through the PRM. The priority circuit PRT determines the cluster competition state and gives the priority right to the request. The receiver RCV receives the requests from the cluster CLU0 to CLU3. The bit RDCI is a real cluster number which generated the request and is set by the output of the priority circuit PRT. The bit RRCI is a register indicating the destination of the cluster transferring the request and is set by the output of the circuit LRCL.

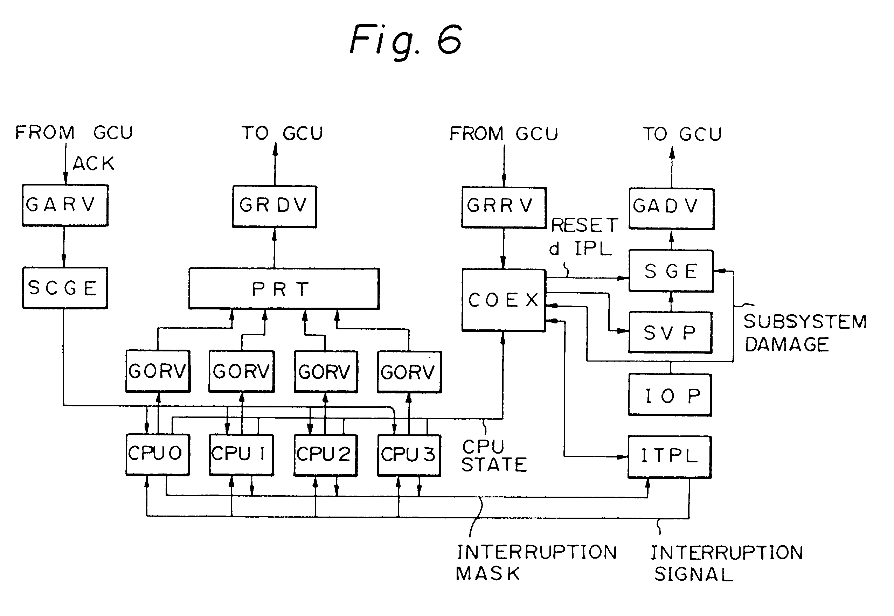

Figure 6 is a schematic block diagram of the memory control unit MCU according to an embodiment of the present invention. In Fig. 6, GORV represents a GSIGP order receiver, SCGE a states and condition code generator, GARV a GSIGP acknowledge receiver, GRDV a GSIGP request driver, GRRV a GSIGP request receiver, COEX a command executor, ITPL an interruption pending latch, IOP an I/0 processor, SGE a status generator, and GADV a GSIGP acknowledge driver.

The GSIGP acknowledge receiver GARV is a circuit receiving the acknowledge ACK from the global control unit GCU; the status and condition code generator SCGE is a circuit generating the STATUS and CC order based on the acknowledge ACK; the GSIGP request drive is a circuit generating the request of the GSIGP to the GCU; the priority circuit PRT is a circuit determining the priority of the request when sent from the processor CPU; the GSIGP order receiver GORV is a circuit receiving the GSIGP request from the processor CPU and generating the request to the global control unit GCU; and the command executor COEX executes the request sent from the GCU through the GSIGP request receiver GRRV. In the SENSE order, the command executor COEX requests the status generator SGE to generate the status information, and in the reset and IPL order, the command executor COEX requests the service processor SVP to generate the status information and requests the status generator SGE to also generate the status information. In the case of an interruption, the command executor COEX checks the state of the interruption pending latch ITPL. If the interruption pending latch ITPL is turned 0FF, the command executor COEX turns ON the interruption pending latch ITPL and informs the status generator SGE that the ITPL is turned ON. If the interruption pending latch ITPL is turned ON, the command executor COEX informs the status generator SGE that the ITPL is turned ON.

The interruption pending latch ITPL is turned ON by the request from the command executor COEX. Further, the interruption pending latch ITPL supervises the interruption mask MSK to inhibit the interruption from the processor CPU, detects the processor CPU for which the interrupt mask is turned ON, and derives the interrupt from that processor. The I/O processor IOP carries out the input/output processing. When a fault occurs at the I/O processor IOP, a SUBSYSTEM-DAMAGE signal is sent to the status generator SGE. The service processor SVP carries out the reset of the cluster and the IPL processing. Further, the service processor SVP processes the operator function. The status generator SGE generates the status information in accordance with the request from the command executor COEX, and further, takes in the information sent from the service processor SVP and the I/O processor IOP. The GSIGP request receiver GRRV receives the GSIGP request from the global control unit GCU, and the GSIGP acknowledge driver GADV returns the generated status information to the cluster which generated the command.

## Claims

1. A method of control between processors (CPU1,...,CPUn) constituting a multiprocessor system comprising the steps of:
dividing a plurality of processors (CPU1,...,CPUn) constituting the multiprocessor system into a plurality of clusters (1,2,...,m);
defining a state of a cluster (1,2,...,m) based on the states of the processors (CPU1,CPU2,CPU3) belonging to that cluster (1,2,...,m);
sending an order to that cluster; and,
controlling a processor belonging to that cluster based on the order to that cluster,
characterised in that each processor (CPU1,...,CPUn) is defined by four states of STOP, OPERATION, LOAD and CHECK-STOP, wherein CHECK-STOP is the state in which the processor (CPU1,...,CPUn) is not in any of the other states, these four states being exclusive, the state of each cluster (1,2,...,m) is defined by three states of CLUSTER-STOP, CLUSTER-CHECK-STOP, and SUBSYSTEM-DAMAGE, each of these three states being based on said four states of the processor, and in which said CLUSTER-STOP is defined by a state in which none of the processors (CPU1,CPU2,CPU3) is in the OPERATION and LOAD state and at least one processor (CPU1,CPU2,CPU3) is in the STOP state and in which said CLUSTER-CHECK-STOP is defined by a state in which none of the processors is in the STOP, OPERATION and LOAD states.

2. A method as claimed in claim 1, wherein said CLUSTER-CHECK-STOP further includes the state that none of the processors (CPU1, CPU2,CPU3) is connected to another processor (CPU1,CPU2,CPU3) and none of the processors (CPU1,CPU2,CPU3) is supplied with power.

3. A method as claimed in claim 1 or 2, wherein said SUBSYSTEM-DAMAGE is defined by the states in which the cluster (1,2,...,m) recognizes damage to the subsystem.

4. A method as claimed in any preceding claim, wherein said order comprises a GSIGP order used for floating interruption between the processors, constituted by a SENSE order, a CLUSTER-order and a parameter.

5. A method as claimed in claim 4, wherein said GSIGP order further comprises a CLUSTER-SENSE order, a CLUSTER-SYNCHRONOUS-CALL order and a CLUSTER-RESET and LOAD order, wherein a CLUSTER-SENSE order is used for sensing the state of the cluster (1,2,...,m), and CLUSTER-SYNCHRONOUS-CALL is an order to send a synchronous interruption to a cluster (1,2,...,m).

6. A method as claimed in claim 4 or 5, wherein said GSIGP order further comprises a CLUSTER-BROADCAST-INTERRUPTION order and a CLUSTER-ASYNCHRONOUS- INTERRUPTION order, wherein a CLUSTER-BROADCAST-INTERRUPTION is an order sent to all clusters (1,2,...,m) other than that having the source central processing unit so that all other central processing units generate a broadcast interruption.

7. An apparatus for a cluster control between processors (CPU1,... CPUn) constituting a multiprocessor system, the processors (CPU1,....CPUn) being divided into a plurality of clusters (1, 2, 3,...,m), the apparatus comprising:
a global control unit (GCU) connected to each of the clusters (1, 2, 3, ... m) through a corresponding bus line for processing an order between the clusters, characterised in that the global control unit (GCU) comprises a priority circuit (PRT) for determining a priority of the order sent from each of the clusters (1, 2, 3, ...m), a logical-to-real cluster translation logic circuit (LRCL) for converting a logical cluster number to a physical cluster number, a logical- to-real cluster translation table (LRCT) for referring to a relationship between the logical cluster number and the physical cluster number, a cluster connection table (CCNT) for indicating a connection state of the cluster, and a cluster power-ON table (CPON) for indicating a power ON/OFF state of the cluster, and
a memory control unit (MCU1, ... MCUm) provided in each of the clusters and connected between the global control unit (GCU) and each of the processors (CPU1-CPU3) belonging to each of the clusters (1, 2, 3,... m) and controlling transmission and reception of orders between the global control unit (GCU) and the processors (CPU1,...CPUm), wherein each of the clusters (1, 2, 3, ...m) further comprises a local storage unit (LSU) connected to the memory control unit (MCU) and storing data, a direct access storage device (DASD) connected to the memory control unit (MCU) and storing data, and a service processor (SVP) connected to the memory control unit (MCU) and processing the reset operation and an initial program loading operation, the memory control unit comprises a priority circuit (PRT) for determining a priority of requests sent from the processors (CPU1...CPUn) a command executor (COEX) for executing a request sent from the global control unit (GCU), a status generator (SGE) for generating status information in accordance with a request from the command executor (COEX), and an interruption pending latch circuit (ITPL) for turning ON an interruption pending latch.

## Patentansprüche

1. Verfahren der Steuerung zwischen Prozessoren (CPU1, ..., CPUn), die ein Multiprozessorsystem bilden, welches Verfahren die Schritte umfaßt:
Aufteilung einer Mehrzahl von Prozessoren, die das Multiprozessorsystem bilden, in eine Mehrzahl von Clustern (1, 2, ..., m);
Definieren eines Zustands eines Clusters (1, 2, ..., m) basierend auf den Zuständen der Prozessoren (CPU1, CPU2, CPU3), die zu diesem Cluster (1, 2, ..., m) gehören;
Senden eines Befehls an diesen Cluster; und
Steuern eines Prozessors, der zu diesem Cluster gehört, basierend auf dem Befehl an diesen Cluster,
dadurch gekennzeichnet, daß ein jeder Prozessor (CPU1, CPUn) durch vier Zustände, STOP, BETRIEB, LADEN und PRÜFSTOP, definiert ist, bei denen PRÜFSTOP der Zustand ist, in dem der Prozessor (CPU1, ..., CPUn) nicht in irgendeinem der anderen Zustände ist, und diese vier Zustände ausschließlich sind, und daß der Zustand eines jeden Clusters (1, 2, m) durch drei Zustände, CLUSTER-STOP, CLUSTER-PRÜFSTOP und UNTERSYSTEMSCHADEN, definiert ist und jeder dieser drei Zustände auf den vier Zuständen des Prozessors basiert, und daß der CLUSTER-STOP durch einen Zustand definiert ist, in dem keiner der Prozessoren (CPU1, CPU2, CPU3) im BETRIEB- und LADEN-Zustand und mindestens ein Prozessor (CPU1, CPU2, CPU3) im STOP-Zustand ist sowie der CLUSTER-PRÜFSTOP durch einen Zustand definiert ist, in dem keiner der Prozessoren im STOP-, BETRIEB- oder LADEN-Zustand ist.

2. Verfahren nach Anspruch 1, bei dem die CLUSTER-PRÜFSTOP-Funktion den Zustand umfaßt, daß keiner der Prozessoren (CPU1, CPU2, CPU3) mit einem anderen Prozessor (CPU1, CPU2, CPU3) verbunden ist und keiner der Prozessoren (CPU1, CPU2, CPU3) mit Strom versorgt ist.

3. Verfahren nach Anspruch 1 oder 2, bei dem der UNTERSYSTEMSCHADEN durch die Zustände definiert ist, in denen der Cluster (1, 2, ..., m) Schaden an dem Untersystem erkennt.

4. Verfahren nach einem der vorhergehenden Ansprüche, bei dem der Befehl einen GSIGP-Befehl umfaßt, der für schwebende Unterbrechung zwischen den Prozessoren verwendet und von einem LESEN-Befehl, einem CLUSTER-Befehl und einem Parameter gebildet wird.

5. Verfahren nach Anspruch 4, bei dem der GSIGP-Befehl außerdem einen CLUSTER-LESEN-Befehl, einen CLUSTER-SYNCHRON-RUF-Befehl und einen CLUSTER-ZURÜCKSETZEN- und LADEN-Befehl umfaßt sowie ein CLUSTER-LESEN-Befehl zum Lesen des Zustands des Clusters (1, 2, ..., m) verwendet wird und CLUSTER-SYNCHRONRUF ein Befehl zum Senden einer synchronen Unterbrechung an einen Cluster (1, 2, ..., m) ist.

6. Verfahren nach Anspruch 4 oder 5, bei dem der GSIGP-Befehl außerdem einen CLUSTER-RUNDSPRUCHUNTERBRECH-UNG-Befehl und einen CLUSTER-ASYNCHRONUNTERBRECHUNG-Befehl umfaßt, wobei eine CLUSTER-RUNDSPRUCHUNTERBRECHUNG ein Befehl ist, der an alle Cluster (1, 2, ..., m) außer dem mit der zentralen Quellen-Verarbeitungseinheit gesendet wird, so daß alle anderen zentralen Verarbeitungsseinheiten eine Rundspruchunterbrechung erzeugen.

7. Vorrichtung für eine Clustersteuerung zwischen Prozessoren (CPU1, ..., CPUn), die ein Multiprozessorsystem bilden, welche Prozessoren (CPU1, ..., CPUn) in eine Mehrzahl von Clustern (1, 2 , 3, ..., m) aufgeteilt sind, welche Vorrichtung:
eine Gesamtsteuereinheit (GCU) umfaßt, die mit einem jeden der Cluster (1, 2, 3, ..., m) durch eine entsprechende Busleitung zur Verarbeitung eines Befehls zwischen den Clustern verbunden ist, dadurch gekennzeichnet, daß die Gesamtsteuereinheit (GCU) einen Prioritäts-Schaltkreis (PRT) zur Bestimmung einer Priorität des Befehls, der von einem jeden der Cluster (1, 2, 3, ..., m) gesendet wurde, einen logisch-zu-real-Clusterübersetzungslogikkreis (LRCL) zur Umwandlung einer logischen Clusterzahl in eine physikalische Clusterzahl, eine logisch-zu-real-Clusterübersetzungstabelle (LRCT) zur Bezugnahme auf einen Zusammenhang zwischen der logischen Clusterzahl und der physikalischen Clusterzahl, eine Clusterverbindungstabelle (CCNT) zur Angabe eines Verbindungszustands des Clusters und eine Cluster-Strom-EIN-Tabelle (CPON) zur Angabe eines Strom-EIN/AUS-Zustands des Clusters aufweist, und
eine Speichersteuereinheit (MCU1, ..., MCUm) umfaßt, die in einem jeden der Cluster vorgesehen und zwischen die Gesamtsteuereinheit (GCU) und einen jeden der Prozessoren (CPU1-CPU3) geschaltet ist, die zu einem jeden der Cluster (1, 2, 3, ..., m) gehören, sowie Senden und Empfangen von Befehlen zwischen der Gesamtsteuereinheit (GCU) und den Prozessoren (CPU1, CPUm) steuert, wobei ein jeder der Cluster (1, 2, 3, ..., m) außerdem eine lokale Speichereinheit (LSU), die mit der Speichersteuereinheit (MCU) verbunden ist und Daten speichert, eine Direktzugriffsspeichervorrichtung (DASD), die mit der Speichereinheit (MCU) verbunden ist und Daten speichert, und einen Dienstprozessor (SVP), der mit der Speichersteuereinheit (MCU) verbunden ist sowie die Rücksetzoperation und eine anfängliche Programmladeoperation durchführt, aufweist, welche Speichersteuereinheit einen Prioritäts-Schaltkreis (PRT) zur Bestimmung einer Priorität von Anforderungen, die von den Prozessoren (CPU1, ..., CPUn) gesendet wurden, einen Anweisungsausführer (COEX) zur Ausführung einer Anforderung, die von der Gesamtsteuereinheit (GCU) gesendet wurde, einen Statusgenerator (SGE) zur Erzeugung von Statusinformation in Übereinstimmung mit einer Anforderung vom Anweisungsausführer (COEX) und einen Auffangspeicher-für-andauernde-Unterbrechung-Schaltkreis (ITPL) zum Schalten eines Auffangspeichers für andauernde Unterbrechung auf EIN umfaßt.

## Revendications

1. Méthode de commande entre des processeurs (CPU1,..., CPUn) constituant un système multiprocesseur, comprenant les étapes consistant à :
diviser une pluralité de processeurs (CPU1, ..., CPUn) constituant le système multiprocesseur en une pluralité de grappes (1, 2,..., m)
définir un état d'une grappe (1, 2,..., m) selon les états des processeurs (CPU1, CPU2, CPU3) appartenant à cette grappe (1, 2,..., m) ;
envoyer une instruction à cette grappe ; et,
commander un processeur appartenant à cette grappe selon l'instruction envoyée à cette grappe,
caractérisée en ce que chaque processeur (CPU1,..., CPUn) est défini par quatre états ARRET, OPERATION, CHARGEMENT et CONTROLE-ARRET, où l'état CONTROLE-ARRET est un état dans lequel le processeur (CPU1,..., CPUn) n'est pas dans l'un quelconque des autres états, ces quatre états étant exclusifs, l'état de chaque grappe (1, 2,..., m) est défini par trois états ARRET DE GRAPPE, CONTROLE-ARRET DE GRAPPE, et DETERIORATION DE SOUS-SYSTEME, chacun de ces trois états étant dépendant desdits quatre états du processeur, où ledit état ARRET DE GRAPPE est défini par un état dans lequel aucun des processeurs (CPU1, CPU2, CPU3) n'est dans les états OPERATION et CHARGEMENT et au moins un processeur (CPU1, CPU2, CPU3) est dans l'état ARRET, et où ledit état CONTROLE-ARRET DE GRAPPE est défini par un état dans lequel aucun des processeurs n'est dans les états ARRET, OPERATION et CHARGEMENT.

2. Méthode selon la revendication 1, dans laquelle ledit état CONTROLE-ARRET DE GRAPPE comprend en outre l'état dans lequel aucun des processeurs (CPU1, CPU2, CPU3) n'est connecté à un autre processeur (CPU1, CPU2, CPU3) et aucun des processeurs (CPU1, CPU2, CPU3) n'est mis sous tension.

3. Méthode selon la revendication 1 ou 2, dans laquelle ledit état DETERIORATION DE SOUS-SYSTEME est défini par les états dans lesquels la grappe (1, 2,..., m) identifie une détérioration du sous-système.

4. Méthode selon l'une quelconque des revendications précédentes, dans laquelle ladite instruction comprend une instruction GSIGP utilisée pour une interruption flottante entre les processeurs, constituée par une instruction DETECTION, une instruction GRAPPE et un paramètre.

5. Méthode selon la revendication 4, dans laquelle ladite instruction GSIGP comprend en outre une instruction DETECTION DE GRAPPE, une instruction APPEL SYNCHRONE DE GRAPPE et une instruction REMISE A L'ETAT INITIAL DE GRAPPE et CHARGEMENT, dans laquelle une instruction DETECTION DE GRAPPE est utilisée pour détecter l'état de la grappe (1, 2,..., m), et une instruction APPEL SYNCHRONE DE GRAPPE est une instruction pour envoyer un signal d'interruption synchrone à une grappe (1, 2,..., m).

6. Méthode selon la revendication 4 ou 5, dans laquelle ladite instruction GSIGP comprend en outre une instruction INTERRUPTION DE DIFFUSION DE GRAPPE et une instruction INTERRUPTION ASYNCHRONE DE GRAPPE, dans laquelle une instruction INTERRUPTION DE DIFFUSION DE GRAPPE est une instruction envoyée à toutes les grappes (1, 2,..., m) autres que celle comportant l'unité centrale de traitement émettrice pour que toutes les autres unités centrales de traitement génèrent une interruption de diffusion.

7. Dispositif pour une commande par grappe entre des processeurs (CPU1,..., CPUn) constituant un système multiprocesseur, les processeurs (CPU1,..., CPUn) étant divisés en une pluralité de grappes (1, 2, 3,..., m), le dispositif comprenant :
une unité de commande globale (GCU) connectée à chacune des grappes (1, 2, 3,..., m) par une ligne de bus correspondante pour le traitement d'une instruction entre les grappes, caractérisé en ce que cette unité de commande globale (GCU) comprend un circuit de priorité (PRT) pour déterminer une priorité de l'instruction envoyée par chacune des grappes (1, 2, 3,..., m), un circuit logique de traduction de logique en réel de grappe (LRCL) pour convertir un numéro logique de grappe en un numéro réel de grappe, une table de traduction de logique en réel de grappe (LRCT) pour se rapporter à une relation entre le numéro logique de grappe et le numéro réel de grappe, une table de connexions de grappe (CCNT) pour indiquer un état de connexion de la grappe, et une table de mises sous tension de grappe (CPON) pour indiquer un état de mise sous tension/hors tension de la grappe, et
une unité de commande de mémoire (MCU1,..., MCUm) prévue dans chacune des grappes et connectée entre l'unité de commande globale (GCU) et chacun des processeurs (CPU1-CPU3) appartenant à chacune des grappes (1, 2,..., m) et commandant l'émission et la réception d'instructions entre l'unité de commande globale (GCU) et les processeurs (CPU1,..., CPUm),
dans lequel chacune des grappes (1, 2, 3,..., m) comprend en outre une unité de mémoire locale (LSU) connectée à l'unité de commande de mémoire (MCU) et mémorisant des données, un dispositif de mémoire à accès direct (DASD) connecté à l'unité de commande de mémoire (MCU) et mémorisant des données, et un processeur de service (SVP) connecté à l'unité de commande de mémoire (MCU) et traitant l'opération de remise à l'état initial et une opération de chargement de programme initial, l'unité de commande de mémoire comprend un circuit de priorité (PRT) pour déterminer une priorité des demandes émises par les processeurs (CPU1,..., CPUn), un circuit d'exécution de commandes (COEX) pour exécuter une demande émise par l'unité de commande globale (GCU), un générateur d'état (SGE) pour engendrer des informations d'état conformément à une demande du circuit d'exécution de commandes (COEX), et un circuit de bascule de mise en attente d'interruption (ITPL) pour mettre en circuit une bascule de mise en attente d'interruption.
